**Europäisches Patentamt**

**European Patent Office**

**Office européen des brevets**

(19)

(11) Veröffentlichungsnummer: **0 008 325**
**B1**

(12) **EUROPÄISCHE PATENTSCHRIFT**

(45) Veröffentlichungstag der Patentschrift: **19.05.82**

(51) Int. Cl.³: **B 41 F 13/00, F 16 H 55/17**

(21) Anmeldenummer: **79101889.8**

(22) Anmeldetag: **11.06.79**

(54) Vorrichtung zum Antrieb und zur Synchronisierung von Zylindern in Offsetdruckmaschinen.

(30) Priorität: **01.07.78 DE 2829026**

(43) Veröffentlichungstag der Anmeldung:
**05.03.80 Patentblatt 80/5**

(45) Bekanntmachung des Hinweises auf die Patenterteilung:
**19.05.82 Patentblatt 82/20**

(84) Benannte Vertragsstaaten:
**AT BE CH FR GB IT NL SE**

(56) Entgegenhaltungen:
**GB - A - 1 160 011**
**GB - B - 1 209 959**

(73) Patentinhaber: **HEIDELBERGER DRUCKMASCHINEN AKTIENGESELLSCHAFT Alte Eppelheimer Strasse 15-21 D-6900 Heidelberg (DE)**

(72) Erfinder: **Schilling, Paul Heidelbergerstrasse 2 D-6903 Neckargemünd (DE)**
Erfinder: **Rambausek, Hugo Kurpfalzstrasse 6 D-6908 Wiesloch (DE)**
Erfinder: **Jeschke, Willi Berghalde 68 D-6900 Heidelberg (DE)**

(74) Vertreter: **Stoltenberg, Baldo Heinz-Herbert Alte Eppelheimer Strasse 15-21 D-6900 Heidelberg (DE)**

Courier Press, Leamington Spa, England.

# 0 008 325

Vorrichtung zum Antrieb und zur Synchronisierung von Zylindern in Offsetdruckmaschinen

Die Erfindung betrifft einen Antrieb für Zylinder von Offsetdruckmaschinen, bestehend aus einem Räderzug, dessen auf den Achsen der Zylinder angeordnete Antriebsräder als Stirnzahnräder ausgebildet sind, wobei zum Synchronisieren der Rotation der Zylinder Spannvorrichtungen vorgesehen sind, die mit dem jeweils zugeordneten Stirnzahnrad umlaufen und dessen Zahnradkranz je nach Einstellung mehr oder weniger deformieren.

Aus der GB—B—PS 1 209 959 sind Verspannvorrichtungen zum Deformieren des Zahnkranzes bekannt, die im Zahnradkörper selbst untergebracht sind. Diese Verspannvorrichtungen können nur in radialer Richtung eine Verspann-oder Verstellkraft ausüben. Sie vermögen folglich den Zahnkranz ausschließlich in radialer Richtung zu deformieren. Aus diesem Grunde kann man mit den vorbekannten Verspannvorrichtungen im Wesentlichen nur Rundlauffehler beseitigen. Planlauffehler, Verformungen im Radkörper oder Versatz der Verzahnung gegenüber der Drehachse lassen sich mit der vorbekannten vorrichtung nicht beseitigen, da deren Verstellung durch das Zahnspiel beschränkt ist.

Die Aufgabe der Erfindung besteht darin, Dubliererscheinungen und Schieben des Rasters, hervorgerufen durch an sich noch zulässige Verzahnungsabweichungen, sowie durch Form-, Lage- und Lauftoleranzen von Antriebsräder, zu beseitigen.

Erfindungsgemäß wird die Aufgabe durch die kennzeichnenden Merkmale des Anspruchs 1 gelöst. Im Gegensatz zu der vorbekannten Vorrichtung sieht die erfindungsgemäße Lösung eine Deformation des Zahnkranzes in axialer Richtung vor. Diese Deformation ist durch kein Zahnspiel begrenzt. Sie kann daher in einem größeren Ausmaß erfolgen, so daß nicht nur Rundlauffehler, sondern auch Planlauffehler und die üblichen Ungenauigkeiten, die zu Drehfehlern der Zylinder führen, behoben werden können. Die Verformung beispielsweise eines schrägsverzahnten Antriebsrades in axialer Richtung, d. h. seitlich, bewirkt ein geringfügiges Verstellen des Zahnkranzes in Umfangsrichtung, wodurch Zahnspiel und/oder Rundlauffehler beseitigt werden.

Es ist möglich, die Verformung, bzw Verspannung so vorzunehmen, daß dabei die Grundbefestigung des Antriebsrades auf dem Zapfen des zugehörigen Zylinders weder gelöst, noch verändert werden muß. Auf Grund der mit der Verspannvorrichtung erzielbaren Präzision und Feinfühligkeit können die von den obengenannten Fehlern herrührenden Dubliererscheinungen, sowie das Schieben der Rasterpunkte völlig behoben werden.

Im folgenden wird die Erfindung an Hand von mehrere Ausführungsformen darstellenden Zeichnungen näher erläutert. Es zeigt:

Fig. 1 bis 5 Offset-Druckmaschinenanordnungen, in denen die Erfindung vorteilhaft Anwendung finden kann,

Fig. 6 und 7 ein Antriebsrad mit einer Spannscheibe,

Fig. 8 die schematische Darstellung der Verformung eines Antriebsrades nach Figur 6,

Fig. 9 und 10 Abwandlungen der Ausführungsform nach Figur 6 für schrägverzahnte Stirnzahnräder.

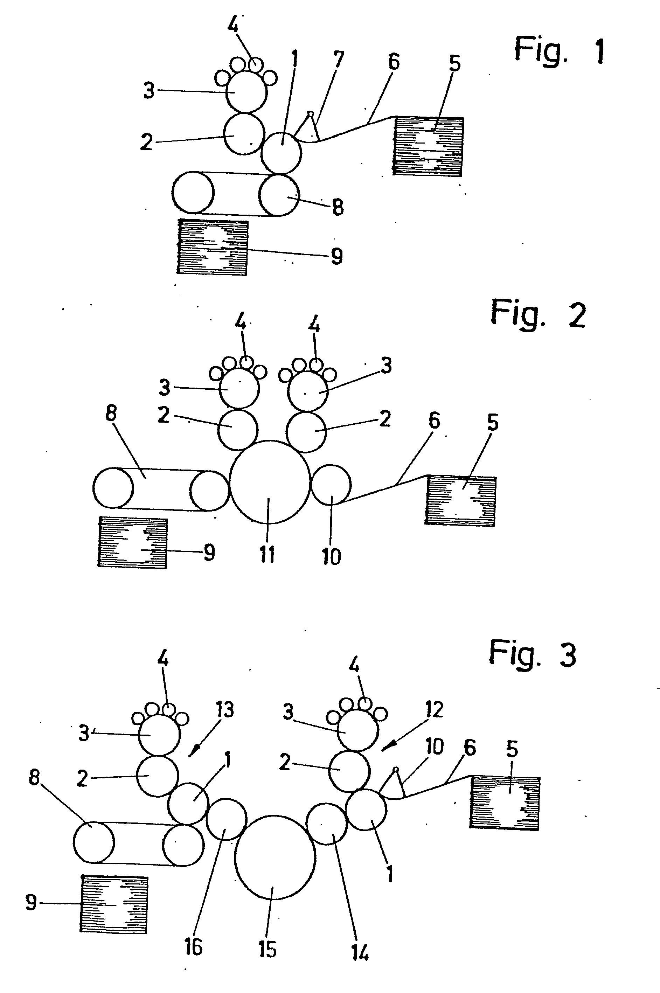

Die Figur 1 zeigt schematisch eine Einfarben-Bogenrotationsoffsetdruckmaschine mit dem Druckzylinder 1, dem Gummizylinder 2, dem Plattenzylinder 3 und dem Farb-Feuchtwerk 4. Von einem Anlegestapel 5 werden die Bogen über den Anlegetisch 6 und den Vorgreifer 7 dem Gegendruckzylinder 1 zugeführt und von dort nach dem Bedrucken über den Ausleger 8 auf dem Auslegestapel 9 abgelegt.

Falls bei dieser Maschine das Antriebsrad des Gummizylinders 2 oder das Antriebsrad des Plattenzylinders 3 mit einem Fehler behaftet ist, tritt ein Schieben der Rasterpunkte auf. Zur Behebung dieser Fehlerquelle müßten erfindungsgemäße Maßnahmen entweder an dem Antriebsrad des Gummizylinders 2 oder an dem Antriebsrad des Plattenzylinders 3 vorgenommen werden.

Die in Figur 2 schematisch dargestellte Zweifarben-Bogenrotationsoffsetdruckmaschine besteht aus Anlegestapel 5, Anlegetisch 6, Anlegetrommel 10, dem doppeltgroßen gemeinsamen Gegendruckzylinder 11, dem Gummizylinder 2, dem Plattenzylinder 3, dem Farb-Feuchtwerk 4, dem Ausleger 8 und dem Auslegestapel 9.

Schon ein geringster Drehfehler am Antriebsrad des doppeltgroßen Gegendruckzylinders 11 führt zu unsynchronem Lauf der beiden Gummizylinder 2. Die Folgen sind Dubliererscheinungen im sogenannten Zweierrhytmus, d. h. der erste, dritte, fünfte usw. bedruckte Bogen zeigt Dubliererscheinungen nach vorn, während der zweite, vierte, sechste usw. bedruckte Bogen Dubliererscheinungen nach rückwärts aufweist. Zur Behebung dieser Dubliererscheinungen wird mit Hilfe einer erfindungsgemäßen Vorrichtung am Antriebsrad des doppeltgroßen Gegendruckzylinders 11 die Drehfehlerquelle beseitigt.

Ähnlich verhält es sich mit der Zweifarben-Bogenrotationsoffsetdruckmaschine gemäß Figur 3. Zwischen den beiden Druckwerken 12 und 13 befinden sich drei Bogenübergabezylinder 14, 15 und 16. Der mittlere Bogenübergabezylinder 15 weist einen doppeltgroßen Durchmesser auf. Die Druckwerke 12, 13 bestehen wieder aus je einem Gegendruckzylinder 1, dem Gummizylinder 2, dem Plattenzylinder 3 und dem Farb-Feuchtwerk 4. Der Bogen wird vom Anlegestapel 5 über den Anlegetisch 6 und den Vorgreifer 10 dem Gegendruckzylinder 1 des ersten Druckwerkes 12 zugeführt und nach dem ersten Druck über die drei Bogenübergabezylinder 14, 15 und 16 dem Gegendruckzylinder des zweiten Druckwerkes 13 übergeben. Nach Erhalt des zweiten Aufdruckes wird der Bogen vom Ausleger 8 dem Auslegestapel 9 zugeführt.

Weist das Antriebsrad des doppeltgroßen Bogenübergabezylinders 15 einen Fehler auf, so wirkt sich das auf die Antriebsräder der Zylinder beider Druckwerke 12 und 13 aus, so daß genau wie bei der Zweifarben-Bogenrotationsoffsetdruckmaschine gemäß Figur 2 ein Dublieren im Zweierrhytmus auf den Drucken festzustellen ist. Zu beheben ist dieser Mangel dadurch, daß an dem Antriebsrad des doppeltgroßen Druckzylinders 15 eine Verspann- bzw. Verstellvorrichtung gemäß der Erfindung vorgesehen wird.

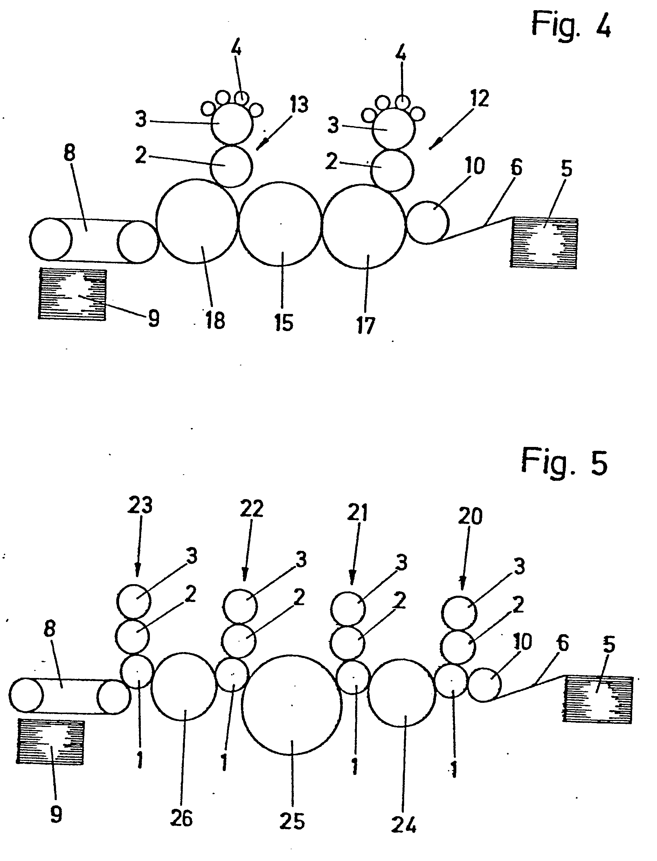

Eine Zweifarben-Bogenrotationsoffsetdruckmaschine gemäß Figur 4 unterscheidet sich von der zuvor beschriebenen lediglich dadurch, daß die Gegendruckzylinder 17 und 18 beider Druckwerke 12 und 13 einen doppeltgroßen Durchmesser aufweisen und daß zwischen den beiden Druckwerken 12 und 13 lediglich ein Bogenübergabezylinder 15 mit doppeltgroßem Durchmesser vorgesehen ist. Die übrigen Teile der Anlegestapel 5, der Anlegetisch 6, die Bogenanlegetrommel 10, die Gummizylinder 2, die Plattenzylinder 3, die Farb-Feuchtwerke 4, der Ausleger 8 und der Auslegestapel 9 gleichen ihrer Aufgabe und Wirkung nach den entsprechenden Bauteilen der zuvor abgehandelten Ausführungsformen.

Weist eines der Antriebsräder der beiden doppeltgroßen Gegendruckzylinder 17 und 18 oder das Antriebsrad des doppeltgroßen Bogenübergabezylinders 15 einen Fehler auf, so wird den Antriebsrädern der Druckwerke 12 und 13 ein unsynchroner Lauf aufgezwungen, der Dubliererscheinungen im Zweierrhytmus zur Folge hat. Zwecks Behebung dieses Fehlers muß auf dem mit dem Mangel behafteten Antriebszahnrad der drei doppeltgroßen Zylinder 15, 17 und 18 eine Spann- bzw. Verstellvorrichtung nach der Erfindung vorgesehen werden.

Besonders vorteilhaft ist eine Vorrichtung nach der Erfindung bei Vierfarben-Bogenrotationsoffsetdruckmaschinen einsetzbar, weil die Einleitung der Antriebskraft problematischer ist als bei Zweifarben-Bogenrotationsoffsetdruckmaschinen, weshalb sie gegen Drehfehler anfälliger sind. Figur 5 zeigt eine der möglichen Zylinderanordnungen solcher Vierfarben-Bogenrotationsoffsetdruckmaschine in Reihenbauweise. Die vier Druckwerke 20, 21, 22 und 24 sind über je einen Bogenübergabezylinder 24, 25 und 26 mit dem benachbarten Druckwerk verbunden. Der mittlere Bogenübergabezylinder 25, der die Druckwerke 21 und 22 miteinander verbindet, weist einen dreifachgroßen Durchmesser auf, während die beiden übrigen Bogenübergabezylinder 24 und 26 nur einen doppeltgroßen Durchmesser besitzen. Die Bezeichnung der übrigen dargestellten Teile der Vierfarben-Bogenrotationsoffsetdruckmaschine entsprechen denen der vorigen Ausführungsformen.

Fehler auf den relativ großen Antriebsrädern der Bogenübergabezylinder 24, 25 und 26 zwingen, wie zuvor schon ausgeführt, den Zylindern 1 bis 3 der angrenzenden Druckwerke einen unsynchronen Lauf auf, was im Falle der doppeltgroßen Bogenübergabezylinder 24 und 26 wieder, wie bekannt, den Zweierrhytmus einer Dubliererscheinung nach sich zeiht. Während der mittlere Bogenübergabezylinder 25 mit dreifachem Durchmesser einen Dreierrhytmus hervorruft, d. h. drei aufeinanderfolgende Bogen weisen unterschiedliche Dubliererscheinungen auf, wobei sich jede einzelne Dubliererscheinung bei jedem dritten folgenden Bogen wiederholt. Durch Anbringung von Verspann- bzw. Verstellvorrichtungen an den Antriebsrädern der Bogenübergabezylinder 24, 25, 26 können die Dubliererscheinungen beseitigt werden.

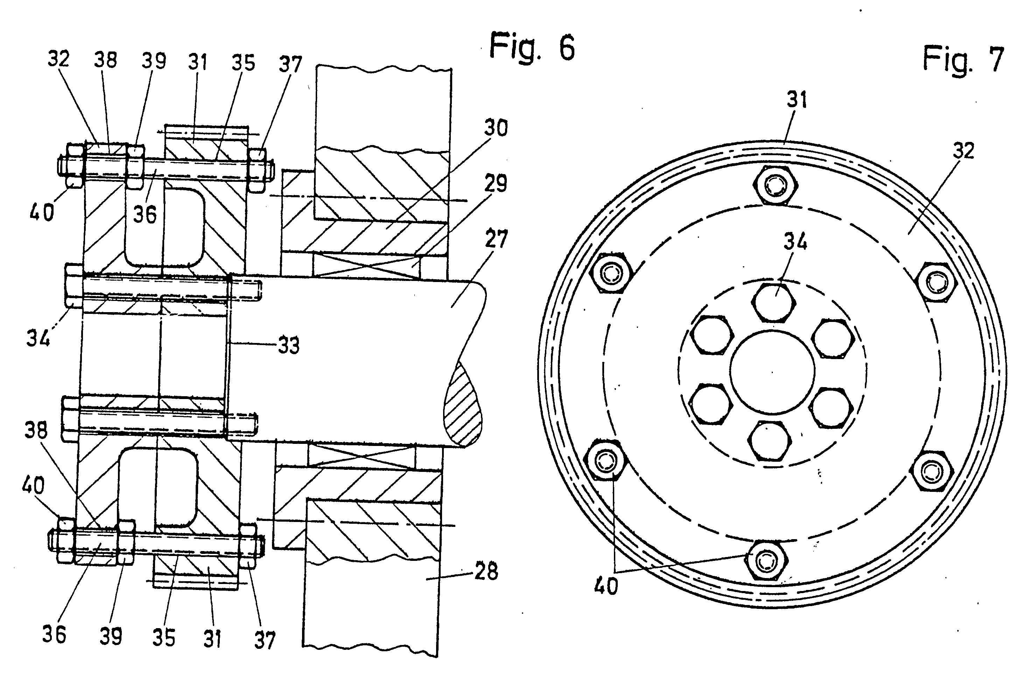

Die Figuren 6 und 7 zeigen schematisch die Anbringung einer Spannvorrichtung nach der Erfindung. Der antriebsseitige Achszapfen 27 eines nicht dargestellten Bogenübergabezylinders ist in der Seitenwand 28 drehbar in einem Wälzlager 29 gelagert, das wiederum von der an der Seitenwand 28 befestigten Lagerbuchse 30 aufgenommen wird. Auf das freie Ende des Achszapfens 27 ist stirnseitig gemeinsam mit einem schrägverzahnten Stirnzahnrad 31 eine Spannscheibe 32 über in die Stirnfläche 33 des Achszapfens 27 geschraubte Befestigungsschrauben 34 zentriert befestigt. Im Zahnkranz 49 des Stirnzahnrades 31 sind in Gewindebohrungen 35 Gewindebolzen 36 hineingeschraubt, die mittels Gegenmuttern 37 gegen Herausschrauben gesichert sind. Das freie Ende der Gewindebolzen 36 ragt durch je eine zugeordnete Bohrung 38 der Spannscheibe 32 hindurch. An der dem Stirnzahnrad 31 zugewandten Seite der Spannscheibe 32 ist eine weitere Stellmutter 39 und auf der gegenüberliegenden Seite der Spannscheibe 32 eine weitere Stellmutter 40 auf jedem Gewindebolzen 36 vorgesehen. Durch Verstellen der Stellmuttern 39 und 40 an einem oder mehreren der Gewindebolzen 36 kann das schrägverzahnte Stirnrad 31 in axialer Richtung deformiert werden.

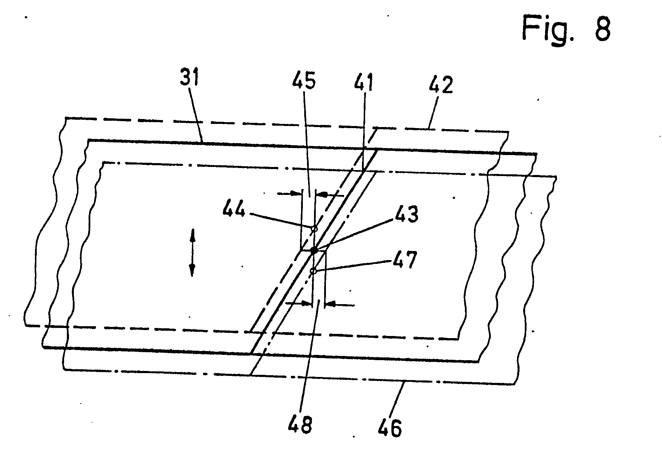

In Figur 8 ist schematisch angedeutet, wie sich eine Deformation des Stirnzahnrades 31 in axialer Richtung auswirkt. Das Stirnzahnrad 31 ist ausschnittweise in der Draufsicht schematisch gezeigt, wobei allerdings nur die vorauslaufende Flankenlinie 41 eines Zahnes dargestellt ist. Bei Verformen des Antriebszahnrades 31 in die gestrichelte Lage 42, wandert der angenommene Punkt 43 mit der Flankenlinie 41 in die obere Stellung 44. Dabei bewegt sich der Eingriffspunkt 43 in Umfangsrichtung um die Strecke 45 nach links.

Wird hingegen auf das Stirnzahnrad 31 eine Kraft ausgeübt, die es in die strichpunktierte Stellung 46 verformt, so wandert der angenommene Punkt 43 mit der Flankenlinie 41 in die untere Stellung 47, was bedeutet, daß der Eingriffspunkt 43 um die Strecke 48 in Umfangsrichtung nach rechts verlagert wird. Die Verspannung bzw. Deformierung des Antriebszahnrades 31 bewegt sich im Hundertstelbereich eines Millimeters. Entsprechend klein ist auch die Verlagerung der Flankenlinie 41 in Umfangsrichtung. Diese geringfügige Verlagerung reicht aber aus, um einen beispielsweise aus Verzahnungs- und Planlauffehlern zusammengesetzten Fehler zu beheben.

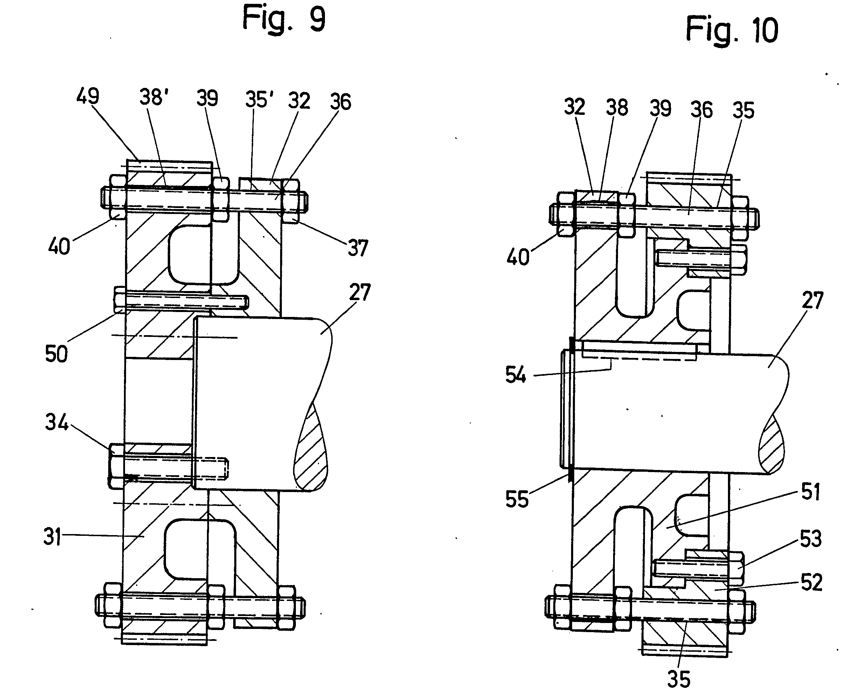

Eine Umkehrung der Spannvorrichtungsanordnung gemäß Figur 6 ist in der Figur 9 dargestellt. Die Spannscheibe 32 ist auf den Zylinderachszapfen 27 mittels eines Gleitsitzes aufgeschoben und über Schrauben 50 mit dem schrägverzahnten Stirnzahnrad 31 fest verbunden. Das Stirnzahnrad 31 ist wiederun zentriert mittels Schrauben 34 an der Stirnseite des Zylinderachszapfens 27 befestigt. Die Gewindebolzen 36 sind in Gewindebohrungen 35' geschraubt, die nahe dem Umfang der Spannscheibe 32 symmetrisch zum Umfang vorgesehen sind. Eine Kontermutter 37 sichert jeden Gewindebolzen 36 wiederum gegen Herausschrauben.

In dem Stirnzahnrad 31 befindet sich für jeden Gewindebolzen 36 eine Bohrung 38', durch die das freie Ende des zugeordneten Gewindebolzens 36 hindurchragt. An beiden Stirnzahnradseiten sind wiederum auf jedem Gewindebolzen 36 die Stellmuttern 39 bzw. 40 vorgesehen. Durch Verstellen dieser Stellmuttern 39 und 40 kann in derselben Weise wie bei der zuvor beschriebenen Ausführungsform eine in axialer Richtung wirkende Zug-oder Druckkraft auf den Zahnkranz 49 des Stirnzahnrades 31 ausgeübt werden, was eine Deformierung in der entsprechenden Richtung zur Folge hat.

Die in Figur 10 gezeigte Ausführungsform zeichnet sich dadurch aus, daß die Spannscheibe 32 und ein Ringflansch 51 zur Aufnahme eines schrägverzahnten Zahnkranzes 52 einstückig verbunden sind. Der Zahnkranz 52 ist über Schrauben 53 an dem Ringflansch 51 befestigt. Die Spannscheibe 32 zusammen mit dem Ringflansch 51 sind mittels einer Paßfeder 54 und einem Sicherungsring 55 auf dem freien Ende des Zylinderachszapfens 27 fest angeordnet.

Die Anbringung der Gewindebolzen 36 entspricht voll und ganz derjenigen gemäß Figur 6. Sie braucht hier also nicht näher erläutert zu werden.

Statt den in den Abbildungen angewandten Zug- und Druckschrauben können auch andere Maschinenelemente, wie Exzenterbolzen, Keile usw. benützt werden.

**Patentansprüche**

1. Antrieb für Zylinder von Offsetdruckmaschinen, bestehend aus einem Räderzug, dessen auf den Achsen der Zylinder angeordnete Antriebsräder als Stirnzahnräder ausgebildet sind, wobei zum Synchronisieren der Rotation der Zylinder Spannvorrichtungen vorgesehen sind, die mit dem jeweils zugeordneten Stirnzahnrad umlaufen und dessen Zahnradkranz je nach Einstellung mehr oder weniger deformieren, dadurch gekennzeichnet, daß die Stirnzahnräder (31; 51/52) schrägverzahnt sind, daß koaxial zu jedem Stirnzahnrad (31; 51/52) eine mit demselben drehfest verbundene Spannscheibe (32) vorgesehen ist, und daß an der Spannscheibe (32) zwei oder mehr in axialer Richtung auf den Zahnkranz (49 oder 52) des zugeordneten Stirnzahnrades (31; 51/52) einwirkende Spannvorrichtungen (35—40) angebracht sind.

2. Vorrichtung nach Anspruch 1 dadurch gekennzeichnet, daß die Verspannvorrichtung eine Spannscheibe (32) umfasst, welche gemeinsam mit einem schrägverzahnten, als Antriebszahnrad dienenden Stirnzahnrad (31) über Schrauben (34) zentriert an dem Achszapfen (27) des Zylinders befestigt ist, daß im Stirnzahnrad (31) in seinem in radialer Richtung unterhalb des Zahnkranzes anschließenden Bereich symmetrisch in Umfangsrichtung verteilt Gewindebohrungen (35) vorgesehen sind, in die Gewindebolzen (36) eingeschraubt und gesichert sind, daß die von dem Stirnzahnrad (31) seitlich vorstehenden freien Enden der Gewindebolzen (36) durch je eine Bohrung (38) in der Spannscheibe (32) hindurchragen, deren dem Stirnzahnrad (34) zugewandte Seitenfläche zumindest im Bereich des Zahnkranzes und des in radialer Richtung unterhalb des Zahnkranzes anschließenden Bereiches des Stirnzahnrades im Abstand von demselben liegt, und daß auf jedem Gewindebolzen (36) an beiden Seiten der Spannscheibe (32) je eine Spannmutter (39 bzw. 40) vorgesehen ist. (Fig. 6)

3. Vorrichtung nach Anspruch 1 dadurch gekennzeichnet, daß die Verspanneinrichtung eine auf dem Achszapfen (27) des Zylinders angeordnete Spannscheibe (32) umfaßt, welche auf der Seite des schrägverzahnten Stirnzahnrades (31) mit demselben verbunden ist, die der Gestellseitenwand (28) zugewandt ist, daß die Spannscheibe (32), deren dem Stirnzahnrad (31) zugewandte Seitenfläche zumindest im Bereich des Zahnkranzes und des in radialer Richtung unterhalb des Zahnkranzes anschließenden Bereiches des Stirnzahnrades im Abstand von demselben liegt, symmetrisch in Umfangsrichtung verteilt Gewindebohrungen (35') aufweist, in die Gewindebolzen (36) eingeschraubt und gesichert sind, daß das Stirnzahnrad (31) in seinem in radialer Richtung unterhalb des Zahnkranzes anschließenden Bereich mit Bohrungen (38') versehen ist, durch welche die von der Spannscheibe (32) seitlich vorstehenden freien Enden der Gewindebolzen (36) hindurchragen, und daß auf jedem Gewindebolzen (36) an jeder Seitenfläche des Stirnzahnrades je eine Spannmutter (39 bzw. 40) vorgesehen ist. (Fig. 9)

4. Vorrichtung nach Anspruch 1, dadurch gekennzeichnet, daß die die Verspannvorrichtung bildende Spannscheibe (32) auf dem antriebsseitigen Achszapfen (27) des Zylinders aufsitzend über eine Paßfeder (54) formschlüssig damit verbunden ist und an ihrem in radialer Richtung gesehen innen liegenden Endabschnitt einen axial nach der einen Seite vorstehenden Ringflansch (51) aufweist, auf welchen in axialem Abstand von der Spannscheibe (32) ein Zahnkranz (52) mit Schrägverzahnung aufgesetzt und mittels Schrauben (53) befestig ist, daß im Zahnkranz (52) symmetrisch in Umfangsrichtung verteilte Gewindebohrungen (35) vorgesehen sind, in die Gewindebolzen (36) geschraubt und gesichert sind, daß die seitlich vom Zahnkranz (52) vorstehenden freien Enden der Gewindebolzen (36) durch je eine Bohrung (38) in der Spannscheibe (32) hindurchragen, und daß auf jedem Gewindebolzen (36) an beiden Seiten der Spannscheibe (32) je eine Spannmutter (39 bzw. 40) vorgesehen ist. (Fig. 10)

## Claims

1. A driving system for the cylinders of offset printing presses, having a gear wheel train, whose driving wheels, placed on the shafts of the cylinders, are spur gear wheels, and for synchronizing the rotation of the cylinder tightening parts are present, each tightening part turning with its spur gear wheel, and the gear ring thereof is changed in form to a greater or lesser degree dependent on the adjustment characterized in that the spur gear wheels (31; 51/52) are helically cut, in that coaxially with respect to each spur gear wheel (31; 51/52) there is a tightening collar (32) keyedly joined with the said spur gear wheel (31; 51/52) and on the tightening collar (32) there are two or more tightening parts (35 to 40) acting axially on the gear ring (49 or 52) of the spur gear wheel (31; 51/52) in question.

2. A driving system as claimed in claim 1 characterized in that the tightening part has a tightening collar (32) which, in common with a helically cut spur gear wheel (31), used as a driving gear wheel, is fixed and trued up by way of screws (34) on the shaft (27) of the cylinder, in that in the spur gear wheel (31) in its part which in a radial direction is under the gear ring and next thereto there are threaded holes (35), spaced symmetrically about the axis, into which threaded studs (36) are screwed and locked in position, in that the free ends, running out from the spur gear wheel (31) to the side, of the threaded studs (36) in each case go out through a hole (38) in the tightening collar (32), whose side face, turned towards the spur gear wheel (34), at least at the gear ring and the part under the gear ring in a radial direction and next thereto, of the spur gear wheel is placed at a distance therefrom, and in that on each threaded stud (36), on the two sides of the tightening collar (32) there is in each case a nut (39 or 40) for doing it up tight (figure 6).

3. A driving system as claimed in claim 1 characterized in that the tightening part has a tightening collar (32) fixed on the shaft (27) of the cylinder, and the tightening collar (32) is joined to the helically cut spur gear wheel (31) on the side thereof which is turned towards the frame wall (28), in that the tightening collar (32), whose side face, turned towards the spur gear wheel (31) at least at points near the gear ring and in the part of the spur gear wheel which in a radial direction is under the gear ring and next thereto, is placed spaced from the same, has threaded holes (35') spaced out symmetrically round the axis, and threaded studs (36) are screwed into them and locked in position, in that the spur gear wheel (31) has, in its part which is radially under the gear ring and is next thereto, holes (38') with the free ends, running out sideways from the tightening collar (32), of the threaded studs (36) running out through them, and in that on each threaded stud (38) on each side face of the spur gear wheel there is in each case a nut (39 or 40) for doing it up tight (figure 9).

4. A driving system as claimed in claim 1 characterized in that the tightening collar (32), forming the tightening part, is seated on the drive-side shaft (27) of the cylinder and is joined therewith by a key (54), and the tightening collar (32) has in its end part which is on the inside on looking in a radial direction, a collar ring (51) running out to one side, and on the collar ring, axially spaced from the tightening collar (32), there is a gear ring (52) with helically cut teeth thereon, it being fixed in position by way of screws (53), in that in the gear ring (52) threaded holes (35) are symmetrically spaced round the axis, threaded studs (36) being screwed into such holes and locked in position, in that the free ends, running out to the side from the gear ring (52), of the threaded studs (36) are in each case positioned so as to be running through a hole (38) in the tightening collar (32), and in that on each threaded stud (36), on the two sides of the tightening collar (32) there is a nut (39 or 40) for screwing it up tight (figure 10).

## Revendications

1. Entraînement pour cylindres de machines à imprimer offset, composé d'un train de roues, dont les roues d'entraînement montées sur les axes des cylindres sont réalisées sous la forme de roues dentées cylindriques, cependant que, pour synchroniser la rotation des cylindres sont prévus des dispositifs gauchissants qui tournent chacun avec la roue dentée cylindrique correspondante et déforment plus ou moins la couronne dentée de cette roue dentée cylindrique suivant le réglage, caractérisé en ce que les roues dentées cylindriques (31; 51/52) sont à denture oblique, en ce que, coaxialement à chaque roue dentée cylindrique (31; 51/52) est prévu un disque de mise en contrainte (32) relié à cette roue dentée cylindrique solidairement en rotation, et en ce que sur le disque de mise en contrainte (32) sont montés au moins deux dispositifs de mise en contrainte (35—40) qui agissent en direction axiale sur la couronne de dents (49 ou 52) de la roue dentée cylindrique correspondante (31; 51/52).

2. Dispositif suivant la revendication 1, caractérisé en ce que le dispositif gauchissant comprend un disque de mise en contrainte (32) qui est fixé en position centrée sur le tourillon (27) du cylindre, conjointement avec une roue dentée cylindrique (31) à denture oblique, servant de roue dentée d'entraînement, par l'intermédiaire d'un disque (34), en ce que, dans la roue dentée cylindrique (31) dans la zone située au-dessous de la couronne de dents dans la direction radiale et adjacente à cette couronne sont prévus des trous filetés (35) répartis symétriquement dans la direction circonférentielle et dans laquelle des tiges filetées (36) sont vissées et bloquées, en ce que les extrémités libres des tiges filetées (36) qui font saillie latéralement sur la roue dentée cylindrique (31) émergent chacune à travers un perçage (38) du disque de mise en contrainte (32) dont la face latérale dirigée vers la roue dentée cylindrique (31) est située, du moins dans la région de la couronne de dents et de la zone située au-dessous de la couronne de dents dans la direction radiale, et adjacente à cette couronne de dents, à distance de cette roue dentée cylindrique, et en ce que, sur chaque tige filetée (36) est prévu, sur chacun des deux côtés du disque de mise en contrainte (32) un écrou de mise en contrainte (39 ou 40).

3. Dispositif suivant la revendication 1, caractérisé en ce que le dispositif gauchissant comprend un disque de contrainte (32), monté sur le tourillon (27) du cylindre, qui est relié à cette roue dentée cylindrique sur le côté de la roue dentée cylindrique à denture oblique (31) qui est dirigée vers la paroi latérale (28) du bâti, en ce que le disque de mise en contrainte (32) dont la surface latérale dirigée vers la roue dentée cylindrique (31) se trouve à distance de celle-ci du moins dans la région de la couronne de dents et de la zone de la roue dentée cylindrique située au-dessous de la couronne de dents dans la direction radiale, et adjacente à cette couronne, présente des perçages filetés (35') répartis dans la direction circonférentielle et dans lesquels les tiges filetées (36) sont vissées et bloquées, en ce que, dans sa zone située au-dessous de la couronne de dents dans la direction radiale, et adjacente à cette couronne, la roue dentée cylindrique (31) est munie de perçages (38') à travers lesquels émergent les extrémités libres des tiges filetées (36) qui font saillie latéralement par rapport au disque de mise en contrainte (32) et en ce que, sur chaque tige filetée (36) est prévu, sur chaque surface latérale de la roue dentée cylindrique un écrou de mise en contrainte (39 ou 40) (Figure 9).

4. Dispositif suivant la revendication 1, caractérisé en ce que le disque de mise en contrainte (32) qui forme le dispositif gauchissant, monté sur le tourillon côté entraînement (27) du cylindre et relié à ce tourillon par une liaison mécanique par l'intermédiaire d'une clavette ajustée (54) et présente, sur son segment terminal situé à l'intérieur, vu dans la direction radiale, une collerette annulaire (51) qui fait saillie axialement vers un côté et sur laquelle est monté, à distance axiale du disque de mise en contrainte (32), une couronne de dents (52) à denture oblique et fixée au moyen de vis (53), en ce que, dans la couronne de dents (52) sont prévus des perçages filetés (35) répartis symétriquement dans la direction circonférentielle, dans lesquels les tiges filetées (36) sont vissées et bloquées, en ce que les extrémités libres des tiges filetées (36) qui émergent latéralement de la couronne de dents (52) sont engagées chacune à travers un perçage (38) du disque de mise en contrainte (32) et en ce que, sur chaque tige filetée (36) est prévu sur chacune des deux faces du disque de mise en contrainte (32), un écrou de mise en contrainte (39 ou 40). (Figure 10).

0 008 325

Fig. 1

Fig. 2

Fig. 3

Fig. 4

Fig. 5

Fig. 7

Fig. 6

Fig. 8

Fig. 9

Fig. 10